# EUROPÄISCHE PATENTSCHRIFT

(11) **EP 1 658 533 B1**
(45) Veröffentlichungstag und Bekanntmachung des Hinweises auf die Patenterteilung: **14.05.2008**
(21) Anmeldenummer: 04741271.3
(22) Anmeldetag: 26.07.2004
(51) Int. Cl.: G05B 13/02

(54) **VERFAHREN UND EINRICHTUNG ZUR STEUERUNG EINER ANLAGE ZUR HERSTELLUNG VON STAHL**
METHOD AND DEVICE FOR CONTROLLING AN INSTALLATION FOR PRODUCING STEEL
PROCEDE ET DISPOSITIF POUR ASSURER LA COMMANDE D'UNE INSTALLATION DE PRODUCTION D'ACIER

(30) Priorität: 27.08.2003 DE 10339766
(43) Veröffentlichungstag der Anmeldung: 24.05.2006
(73) Patentinhaber: SIEMENS AKTIENGESELLSCHAFT, 80333 München (DE)
(72) Erfinder: BÜRVENICH, Hans-Peter, 91056 Erlangen (DE); DACHTLER, Gerhard, 91083 Baiersdorf (DE); SÖRGEL, Günter, 90455 Nürnberg (DE)
(86) Internationale Anmeldenummer: PCT/EP2004/008347
(87) Internationale Veröffentlichungsnummer: WO 2005/021811

(56) Entgegenhaltungen:
- EP-A- 0 901 016
- CA-A1- 2 299 945
- DE-A1- 19 637 917
- DE-A1- 19 806 267
- DE-A1- 19 850 492
- US-A- 5 778 151

## Beschreibung

Die Erfindung betrifft ein Verfahren zur Steuerung einer Anlage zur Herstellung von Stahl, der bestimmte vom Gefüge abhängige, durch Betriebsparameter der Anlage beeinflussbare Materialeigenschaften aufweist, welche Betriebsparameter mittels eines Rechenprogramms zur Gefügeoptimierung festgelegt werden.

Stahl muss mit den vom Kunden gewünschten Materialeigenschaften hergestellt werden. Wichtige Materialeigenschaften von Stahl sind z.B. die Zugfestigkeit, die Streckgrenze und die Bruchdehnung. Diese Werkstoffeigenschaften spielen eine große Rolle, wenn der Stahl für das Tiefziehen vorgesehen ist, beispielsweise bei der Herstellung von Karosserieblechen oder Getränkedosen.

Die Werkstoffeigenschaften des Stahls ergeben sich aus seiner Gefügestruktur, die wiederum durch die Produktionsvorschriften für den Herstellungsprozess beeinflusst und festgelegt wird.

Bei der Herstellung muss sichergestellt werden, dass die chemische Zusammensetzung des Stahls mit den jeweiligen Sollwerten übereinstimmt. Diese Sollwerte entsprechen Mengenanteilen, die durch eine chemische Laboranalyse überprüft werden können.

Um einen Stahl zu produzieren, der den Vorgaben entspricht, ist es weiterhin erforderlich, bestimmte Betriebsparameter einzuhalten. Zu diesen Betriebsparametern zählen Sollwerte für die Schmelz-, Gieß-, Aufwärm-, Walz- und Kühlphase. Dabei kann es sich z.B. um Temperaturen, Drücke, Geschwindigkeiten oder deren zeitliche Veränderung handeln.

Ein Sollwert für einen bestimmten Mengenanteil eines Elements oder ein Sollwert für einen Betriebsparameter besteht immer aus einem Zielwert und einem unteren und einem oberen Grenzwert, zwischen denen der Toleranzbereich liegt.

In Stahl- oder Walzwerken ist es häufig schwierig, geeignete Sollwerte für die Produktion so festzulegen, dass die gewünschten Materialeigenschaften beim Endprodukt unter möglichst kostengünstigen und risikoarmen Produktionsbedingungen entstehen. Dabei müssen die Anforderungen des Kunden, der z.B. eine genormte Stahlqualität für ein bestimmtes Anwendungsgebiet bestellt, hat unter Berücksichtigung der in dem Stahlwerk verwendeten Produktionsverfahren umgesetzt werden. Zu diesen Produktionsverfahren zählen die Werksnormen für die Stahlqualität sowie die Zielwerte und Toleranzbereiche der einzelnen Produktionsschritte.

In der Praxis weichen die Istwerte aus der Produktion jedoch stets von den Sollwerten des Herstellungsprozesses ab. Den Abweichungen der Istwerte eines Produktionsschrittes muss in den Folgeschritten so entgegengewirkt werden, dass die geforderten Materialeigenschaften, z.B. der Mindestwert der Zugfestigkeit, erreicht wird. Wenn dieser Wert nicht mehr erreicht werden kann, kann das entsprechende Stahlmaterial (die Schmelze, die Bramme oder das Coil) nicht mehr für den vorgesehenen Auftrag verwendet werden. In diesem Fall muss die Bearbeitung dieses Teils des Auftrags wieder beim ersten Produktionsschritt beginnen, was zu finanziellen Einbußen und evtl. auch zu Lieferverzögerungen führt.

Die Festlegung geeigneter Sollwerte für die Produktion wird üblicherweise von einer Planungsabteilung im Rahmen der technischen Auftragseinplanung durchgeführt. Der Bearbeiter nutzt verschiedene technische Tabellen, die in einer Datenverarbeitungsanlage gespeichert sind, um den Auftrag des Kunden in ein geeignetes Produktionsverfahren des Werkes umzusetzen, wobei dieses Produktionsverfahren mit bestimmten Sollwerten verknüpft ist.

Für den Stahl werden die Mengenanteile der einzelnen Elemente festgelegt, die durch eine chemische Laboranalyse überprüft werden können. Dieser Satz von Sollwerten wird auch als Stahlmarke bezeichnet. Ebenso werden die Sollwerte für die Betriebsparameter der einzelnen Produktionsschritte festgelegt. Im Stahlwerk erfolgt die Herstellung der Schmelze und der daraus gegossenen Brammen. Im Ofen werden die Brammen für den Walzvorgäng erwärmt. Im Warmwalzwerk werden die Brammen zu Coils gewalzt, gegebenenfalls erfolgt in einem Kaltwalzwerk ein weiteres Walzen beziehungsweise eine qualitative Vergütung der Coils und gegebenenfalls eine Zerteilung in kleinere Formate.

Es tritt häufig der Fall auf, dass ein bestimmter Auftrag durch mehrere, alternative Sollwertesätze produziert werden kann, die sich aus den Tabellen ergeben. Um die gewünschten Eigenschaften zu erreichen, muss sich der Bearbeiter für einen dieser möglichen Sollwertsätze entscheiden, da der Produktionsauftrag an die Produktionsabteilung nur einen Sollwertsatz zulässt. Der Bearbeiter entscheidet sich nach seiner Produktionserfahrung für einen bestimmten Sollwertsatz. In diesen technischen Tabellen, die in der Qualitätsabteilung gepflegt werden, steckt das gesamte Know-how der Firma bezüglich der Produktionsvorgänge. Neue Einträge und Änderungen in diesen Tabellen ergeben sich durch langjährige Produktionserfahrung sowie aus Versuchsproduktionen mit schrittweise geänderten Sollwertsätzen.

In den vergangenen Jahren sind mathematische Verfahren zur Berechnung der Materialeigenschaften des Stahls entwickelt worden. Diese Verfahren enthalten ein physikalisch-metallurgisches Modell des Herstellungsprozesses und ermitteln für jeden Produktionsschritt die Veränderungen der Gefügestruktur des Stahls und berechnen daraus die Materialeigenschaften.

Auf diese Weise können einzelne Produktionsschritte am Rechner simuliert werden. Für übliche Stahlsorten wurde nachgewiesen, dass die berechneten Materialeigenschaften gut mit den tatsächlich gemessenen Werten übereinstimmen.

Aus der EP 0 901 016 A2 ist ein mathematisches Verfahren zur Bestimmung von Eigenschaften eines Stahls bekannt. Typische Größen wie Streckgrenze, Zugfestigkeit, Bruchdehnung, Härte usw. sollen mittels eines neuronalen Netzes bestimmt werden.

Aus der WO 99/24182 ist ein Verfahren zur Steuerung einer hüttentechnischen Anlage zur Erzeugung von Stahl oder Aluminium bekannt, in der Stahl mit bestimmten vom Gefüge abhängigen Materialeigenschaften hergestellt wird, wobei die Materialeigenschaften von Betriebsparametern, mit denen die Anlage betrieben wird, abhängig sind. Die Festlegung der Betriebsparameter soll mittels eines Gefügeoptimierers in Abhängigkeit der gewünschten Materialeigenschaften des Stahls erfolgen. Der Gefügeoptimierer ist ein Rechenprogramm zur Gefügeoptimierung, das von neuronalen Netzen Gebrauch macht.

Es ist jedoch nachteilig, dass die Produktionsplanung häufig nicht in der Lage ist, ein gutes Produktionsprogramm, das heißt eine gute Abfolge, zu erzeugen, da man auf einen Sollwertsatz je Produktionsauftrag festgelegt ist. Ein Beispiel dafür ist die Schmelzenplanung, die viele Produktionsaufträge mit unterschiedlichen Stahlmarken und Dimensionen in Schmelzen und Sequenzen, das heißt technisch verträgliche Abfolgen von Schmelzen, zusammenfassen muss. In einer Schmelze können nur Aufträge einer Stahlmarke bearbeitet werden und in einer Sequenz können nur Schmelzen mit verträglichen Stahlmarken aufeinander folgen. Häufig gibt es im Auftragsvorrat viele qualitativ ähnliche Aufträge mit kleinen Mengen, die aber verschiedene Stahlmarken haben. Diese Situation führt oft zu schlechten Produktionsprogrammen, da die Anzahl möglicher Schmelzen im Programm gering ist und die einzelnen Schmelzen oft mit sogenannten Lageraufträgen aufgefüllt werden müssen, da Kundenaufträge passender Qualitäten fehlen.

Es ist auch nachteilig, dass die Qualitätsabteilung viel Geld und Zeit aufwenden muss, um Sätze von Sollwerten bezüglich der Anforderungen an die Materialeigenschaften und der Produktionskosten zu optimieren. Die vielen erforderlichen Produktionsversuche mit modifizierten Sätzen von Sollwerten und der sich daran jeweils anschließende Test der Materialeigenschaften mit Laborproben führt zu einem hohen Aufwand. Viele Sätze von Sollwerten sind daher im Hinblick auf die angestrebten Zielwerte und Toleranzbereiche Sicherheitskompromisse, die aus einer ungenügenden Anzahl von Produktionsversuchen abgeleitet werden mussten. Größere Toleranzbereiche und kostengünstigere Zielwerte für bestimmte Materialeigenschaften können erst nach langjähriger Produktion einer Stahlsorte umgesetzt werden.

Grundsätzlich versuchen die Regelsysteme der einzelnen Produktionseinheiten ihre Sollwerte für die Ausgangsgrößen einzuhalten, auch wenn die Eingangswerte, das heißt die Istwerte des vorhergehenden Schritts, abweichen. Wenn eine Bramme zu kalt aus dem Ofen an der Walzstraße ankommt, versucht das Regelsystem der Walzstraße dennoch, seinen Sollwert für die Ausgangstemperatur des gewalzten Bandes durch eine geeignete Änderung der Stellgrößen des Regelsystems zu erreichen. Dieses funktioniert nur für Sollwerte, die noch beeinflussbar sind, beispielsweise falsche Temperaturen oder Dimensionen, die bis zu einem gewissen Grad geändert werden können. Es ist jedoch nicht möglich, einen Stahl mit einer falschen chemischen Analyse, das heißt mit falschen Mengenanteilen der Legierungselemente, im nachfolgenden Walzwerk noch zu verändern.

Falls die Abweichungen nicht toleriert werden können, weil z.B. einzelne Elemente in der chemischen Analyse die Grenzwerte verletzen, wird das aktuelle Zwischenprodukt für diesen Auftrag aufgegeben. Über die Produktionsplanung muss mit hoher Priorität Material nachproduziert werden, was jedoch zu Zeitverzögerungen führt. Das aktuelle Zwischenmaterial wird entweder auf andere, passende Aufträge umgebunden, also umgewidmet, notfalls auf Lageraufträge ohne Kundenbindung, oder es wird aus der Produktion herausgenommen und in ein Zwischenlager gesetzt. Die letzte Möglichkeit ist, das Material als Schrott zu kennzeichnen und wieder in den Ressourcenkreislauf zurückzubringen.

Der Erfindung liegt daher das Problem zugrunde, ein Verfahren zur Steuerung einer Anlage zur Stahlherstellung anzugeben, das Aufträge flexibler einplanen kann und flexibler auf Abweichungen von den Sollwerten reagieren kann.

Zur Lösung dieses Problems ist bei einem Verfahren der eingangs genannten Art vorgesehen, dass gleichzeitig die Sollwerte der chemischen Zusammensetzung des Stahls mittels des Rechenprogramms zur Gefügeoptimierung festgelegt werden.

Anders als bei bekannten Verfahren werden nicht nur die Betriebsparameter, die einen Einfluss auf die Materialeigenschaften haben, mittels des Rechenprogramms zur Gefügeoptimierung festgelegt, sondern gleichzeitig auch die Sollwerte der chemischen Zusammensetzung des Stahls. Der Begriff "gleichzeitig" umfasst auch Verfahren, bei denen z.B. in einem ersten Rechengang die Sollwerte der chemischen Zusammensetzung und anschließend in einem zweiten Rechengang die Betriebsparameter ermittelt werden, oder umgekehrt. Die einzelnen Rechengänge können nacheinander ablaufen, wobei stets die Sollwerte der chemischen Zusammensetzung und die Betriebsparameter berücksichtigt werden. Für die Lösung stehen demnach wesentlich mehr Freiheitsgrade zur Verfügung, da pro Auftrag nicht nur ein einziger, zuvor festgelegter Satz von Sollwerten sondern mehrere Sollwertsätze genutzt werden können. Bisher war es nicht möglich, einen Satz von Sollwerten zu korrigieren, da der Bediener an einer Produktionseinheit die dann notwendigen Auswirkungen auf die nachfolgenden Produktionsschritte nicht ermitteln oder vorgeben konnte. Mittels des Rechenprogramms zur Gefügeoptimierung ist es jedoch möglich, die notwendigen Sollwertanpassungen für nachfolgende Produktionsschritte aus den bisherigen Produktionsergebnissen unter Berücksichtigung der geforderten Materialeigenschaften online zu berechnen.

Der Erfindung liegt die Erkenntnis zugrunde, bei der Festlegung der Sollwerte nicht nur den einzelnen Produktionsschritt, sondern den gesamten möglichen Lösungsraum für Variationen von Sollwerten zu berücksichtigen, um die geforderten Materialeigenschaften zu erreichen. In diesem Lösungsraum mit gegenseitig und über Produktionsschritte hinweg voneinander abhängigen Sollwerten sind viel mehr Freiheitsgrade und dementsprechend Lösungsmöglichkeiten enthalten als bisher genutzt wurden.

Indem das Rechenprogramm zur Gefügeoptimierung gleichzeitig für die Festlegung der Sollwerte der chemischen Zusammensetzung des Stahls und der Betriebsparameter genutzt wird, lässt sich die Produktionsplanung wesentlich flexibler gestalten. Zudem kann eine durchgängige Online-Qualitätskontrolle während der einzelnen Produktionsschritte durchgeführt werden. Mit dieser verbesserten Produktionsplanung können alle möglichen Variationen der Sollwerte in die Berechnung einbezogen werden, so dass aus dem vorhandenen Auftragsvorrat bessere Produktionsprogramme entstehen können, das heißt längere Sequenzen von Schmelzen und weniger Füllaufträge in den Schmelzen.

Durch das erfindungsgemäße Verfahren werden während der Produktion Abweichungen einzelner Istwerte von den Sollwerten durch Berechnen der notwendigen Änderungen nachfolgender Sollwerte ausgeglichen, so dass auch bisher nicht tolerierbare Abweichungen toleriert werden können. Konsequenterweise führt das erfindungsgemäße Verfahren dazu, dass die Toleranzbereiche für die Mengenanteile der in dem Stahl enthaltenen Elemente vergrößert werden können.

Es ist zweckmäßig, dass die Sollwerte der chemischen Zusammensetzung und gegebenenfalls dazu passend berechnete Betriebsparameter für eine bestimmte Stahlanwendung jeweils in einem Datensatz zusammengefasst werden. Als Ergebnis einer Optimierungsrechnung wird ein Datensatz für eine bestimmte Stahlanwendung durch das Rechenprogramm ausgewählt und ausgegeben, indem in der Produktionsplanung eine optimale Kombination von Datensätzen für die jeweilige Stahlanwendung der zu planenden Aufträge ausgewählt wird.

Bei dem erfindungsgemäßen Verfahren kann es vorgesehen sein, dass die Istwerte der chemischen Zusammensetzung des Stahls und die Istwerte der Betriebsparameter mit den Sollwerten verglichen werden und das Rechenprogramm zur Gefügeoptimierung beim Vorliegen von Abweichungen erneut durchlaufen wird. Das Ergebnis dieser Berechnung kann lauten, dass ein anderer Sollwertsatz ausgewählt wird, der besser zu den Istwerten passt. Dadurch wird die Anzahl der möglichen Kombinationen beträchtlich erhöht und im Falle einer Abweichung zwischen Istwerten und Sollwerten kann das Stahlprodukt mit großer Wahrscheinlichkeit noch für den beabsichtigten Zweck verwendet werden, indem die weiteren Produktionsschritte mit einem modifizierten Sollwertesatz durchgeführt werden.

Gemäß einer Ausgestaltung des erfindungsgemäßen Verfahrens kann es vorgesehen sein, dass einem Sollwert ein zwischen einer unteren und einer oberen Schranke liegender Toleranzbereich zugeordnet wird und das Rechenprogramm zur Gefügeoptimierung beim Verlassen des Toleranzbereichs zur Festlegung von Sollwerten für die chemische Zusammensetzung des Stahls und/oder der Betriebsparameter erneut durchlaufen wird.

Es kann vorgesehen sein, dass das Rechenprogramm zur Gefügeoptimierung die Sollwerte im Hinblick auf eine oder mehrere Optimierungsgrößen optimiert. Es kann zweckmäßig sein, die Optimierungsrechnungen mit dem Ziel der Minimierung der Materialkosten und/oder Produktionskosten durchzuführen. Beispielsweise können bestimmte teure Legierungselemente eingespart werden, indem bestimmte Behandlungsschritte bei geänderten Temperaturen durchgeführt werden.

Bei dem erfindungsgemäßen Verfahren ist es besonders vorteilhaft, dass während und/oder nach einem Produktionsschritt mittels des Rechenprogramms zur Gefügeoptimierung eine Qualitätskontrolle durch Vergleich der Sollwerte mit den Istwerten durchgeführt wird. Dadurch kann auf relativ langsame und kostspielige Labortests verzichtet werden, deren Aussagekraft in vielen Fällen ohnehin nur begrenzt ist. Durch das Rechenprogramm zur Gefügeoptimierung werden sämtliche Stahlprodukte wie Schmelze, Bramme oder Coil kontinuierlich hinsichtlich ihrer Materialeigenschaften und der Einhaltung der Sollwerte überprüft, so dass echte Materialprüfungen, beispielsweise in Form von Zugtests, auf gelegentliche Kontrollversuche reduziert werden können.

Es empfiehlt sich, bei einem Warmwalzwerk die Qualitätskontrolle an verschiedenen Punkten während des Produktionsablaufs durchzuführen. Besonders geeignet ist dazu die Brammenanbindung an den Produktionsauftrag im Brammenlager, der Ausgang des Erwärmungsofens, der Ausgang des Vorgerüsts und der Ausgang der Haspel am Ende der Produktionslinie. An jedem Kontrollpunkt berechnet das Rechenprogramm zur Gefügeoptimierung die zu erwartenden Materialeigenschaften aus den bis dahin bekannten Istwerten der Produktion sowie dem nachfolgenden Prozess mit den zugeordneten Sollwerten. Können die geforderten Materialeigenschaften in den nachfolgenden Schritten mit den aktuellen Sollwerten nicht erreicht werden, versucht der Gefügeoptimierer automatisch eine Sollwertanpassung. Falls die Berechnung ein positives Ergebnis liefert, gibt die Qualitätskontrolle die Anpassung der Sollwerte frei. Falls die Berechnung kein Ergebnis liefert, sucht die Qualitätskontrolle mit Hilfe des Rechenprogramms zur Gefügeoptimierung in den Sollwertlisten des Auftragsvorrats nach einem kostengünstigen und passenden Sollwertsatz und bindet das Zwischenmaterial auf diesen Auftrag um. Dadurch werden auch neue Sollwerte für die nachfolgenden Produktionsschritte festgelegt.

Es kann vorgesehen sein, dass das erfindungsgemäße Verfahren mit der Produktionsplanung der Anlage zur Stahlherstellung gekoppelt wird. Die Produktionsplanung und die Qualitätskontrolle sind Module des Produktionssteuerungssystems (Manufacturing Execution System). Dementsprechend kann das erfindungsgemäße Verfahren auch direkt mit dem Produktionssteuerungssystem der Anlage zur Stahlherstellung gekoppelt werden.

Die Erfindung betrifft auch eine Einrichtung zur Durchführung des beschriebenen Verfahrens zur Steuerung einer Anlage zur Herstellung von Stahl. Dabei ist erfindungsgemäß vorgesehen, dass das Rechenprogramm zur Gefügeoptimierung gleichzeitig zum Festlegen der Sollwerte der chemischen Zusammensetzung des Stahls und der dazu passenden Betriebsparameter ausgebildet ist.

Weitere Vorteile und Einzelheiten der Erfindung ergeben sich aus dem im folgenden beschriebenen Ausführungsbeispiel sowie anhand der Zeichnungen. Dabei zeigt:
- Fig. 1: eine schematische Darstellung der Wirkungsweise des Gefügeoptimierers;
- Fig. 2: die Veränderung der mechanischen Eigenschaften eines Stahls in Abhängigkeit von der Temperatur und dem Elementgehalt;
- Fig. 3: das Zusammenwirken des Gefügeoptimierers mit einem Produktionssteuerungssystem;
- Fig. 4: ein Flussdiagramm mit den einzelnen Verfahrensschritten;
- Fig. 5: die Durchführung der Qualitätskontrolle während der Produktion; und
- Fig. 6: die Ermittlung optimaler Sollwerte für den gesamten Produktionsweg.

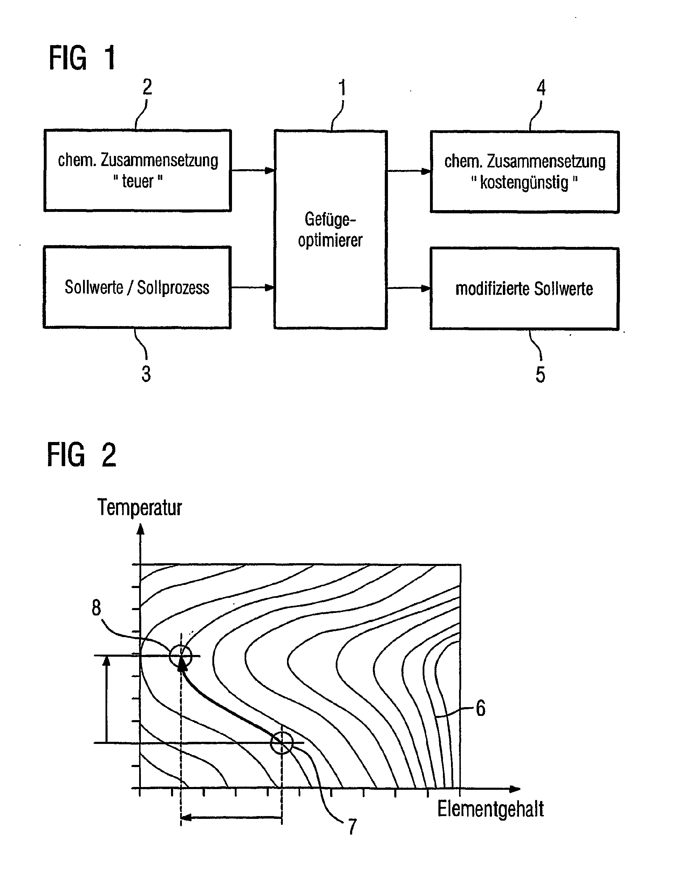

Fig. 1 ist eine schematische Darstellung der Wirkungsweise des Gefügeoptimierers bei der Legierungskostenoptimierung. Das Rechenprogramm zur Gefügeoptimierung, das im folgenden als Gefügeoptimierer 1 bezeichnet wird, erhält Sollwerte 2 für die chemische Zusammensetzung und Sollwerte 3 der Betriebsparameter des Sollprozesses. Die Sollwerte 2, 3 ergeben zusammen eine sogenannte Stahlmarke, die auf Erfahrungen beruht und sämtliche Informationen enthält, die für die Produktion des jeweiligen Auftrags erforderlich sind. Die Materialeigenschaften des hergestellten Stahls sind durch Betriebsparameter der Anlage beeinflussbar, zu diesen zählen Behandlungstemperaturen und Drücke, gegebenenfalls auch deren zeitliche Ableitungen. In dem Gefügeoptimierer 1 sind mathematische Modelle implementiert, die das Materialverhalten simulieren und für jeden Produktionsschritt die Veränderungen der Gefügestruktur des Stahls ermitteln. Der Gefügeoptimierer 1 kann auch mit der Methode der neuronalen Netze arbeiten. Als Ergebnis liefert der Gefügeoptimierer 1 nach der Durchführung von Optimierungsrechnungen modifizierte Sollwerte 4 für die chemische Zusammensetzung des Stahls, die eine kostengünstigere Produktion im Vergleich zu den Sollwerten 2 ermöglichen. Es kann beispielsweise angestrebt werden, relativ teure Legierungsstoffe wie Niob, Mangan oder Titan zu reduzieren, ohne dass eine Verschlechterung der Materialeigenschaften eintritt. Mit den modifizierten Sollwerten für die chemische Zusammensetzung sind modifizierte Sollwerte 5 für die Produktionsprozesse gekoppelt. Die Sollwerte 4, 5 bilden gemeinsam einen Sollwertsatz, der die Grundlage für die Produktion ist.

Fig. 2 zeigt die Veränderung der mechanischen Eigenschaften eines Elements in Abhängigkeit von der Temperatur und dem Elementgehalt.

Der Gefügeoptimierer 1 soll die Produktionskosten optimieren, das heißt minimieren. Eine der Möglichkeiten zur Verringerung der Kosten besteht darin, den Elementgehalt eines bestimmten chemischen Elements, insbesondere eines Legierungselements, zu verringern. Auf der waagerechten Achse ist in Fig. 2 der Elementgehalt eines bestimmten Elements aufgetragen. Auf der senkrechten Achse ist die Temperatur aufgetragen. Die in Fig. 2 eingezeichneten Linien 6 bezeichnen Kombinationen des Elementgehaltes und der Temperatur mit der gleichen mechanischen Eigenschaft. Ein bestimmter Stahl wurde bisher mit dem durch den Punkt 7 angegebenen Elementgehalt hergestellt. Man weiß jedoch, dass die in Fig. 2 eingezeichnete Eigenschaft, bei der es sich beispielsweise um die Festigkeit handeln kann, konstant bleibt, wenn man den Punkt 7 in Pfeilrichtung zum Punkt 8 verschiebt. In der Praxis bedeutet das, dass der Gehalt des jeweiligen Legierungselements reduziert werden kann, gleichzeitig muss der Sollwert der Temperatur für einen bestimmten Produktionsschritt erhöht werden. Durch die Verringerung der Mengenanteile dieses Elements ergibt sich eine Verringerung der Kosten, wobei die mechanischen Eigenschaften des Stahls gleich bleiben.

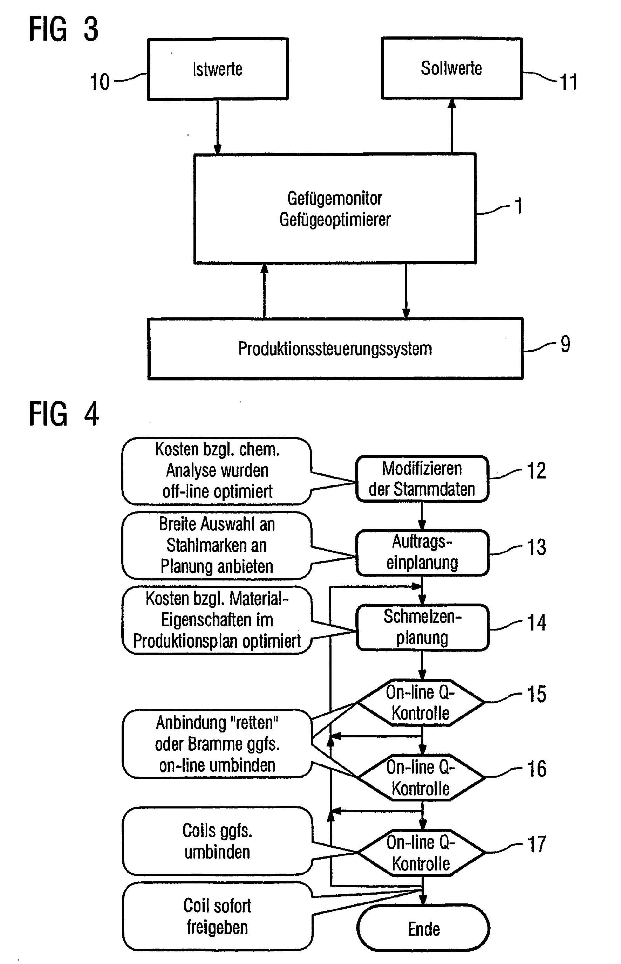

Fig. 3 zeigt das Zusammenwirken des Gefügeoptimierers 1 mit einem Produktionssteuerungssystem. Das Produktionssteuerungssystem 9, das auch als Manufacturing Execution System (MES) bezeichnet wird, umfasst unter anderem die Produktionsplanung und die Qualitätskontrolle. Der Gefügemonitor ist ein Berechnungsmodul, das anhand eingegebener Daten Materialeigenschaften wie die Festigkeit oder Streckgrenze berechnet. Dadurch lassen sich zeitaufwendige Laborproben weitgehend ersetzen. Falls nach der Durchführung einer Berechnung des Gefügemonitors feststeht, dass eine mechanische Eigenschaft nicht eingehalten werden kann, wird mittels des Gefügeoptimierers 1 analysiert, ob das jeweilige Stahlprodukt durch eine Änderung der Sollwerte noch so behandelt werden kann, dass es innerhalb der Toleranzen liegt. Die Istwerte 10, die Eingangsgrößen für den Gefügemonitor beziehungsweise den Gefügeoptimierer 1 sind, umfassen die Mengenanteile der einzelnen chemischen Elemente, Prozesstemperaturen usw. Als Sollwerte 11 werden Betriebsparameter und Prozessparameter ausgegeben, die Grundlage für die weiteren Produktionsschritte sind.

Durch die Koppelung des Gefügeoptimierers 1 mit der Ebene des Produktionssteuerungssystems 9 lässt sich eine Kostensenkung erzielen, da für die Produktion optimierte Stahlmarken verwendet werden. Bei der Qualitätsprüfung der Coils kann Zeit eingespart werden, da der Gefügemonitor Laborproben weitgehend ersetzt. Dennoch werden Materialeigenschaften für jedes Coil berechnet, so dass die Wahrscheinlichkeit von Fehlern verringert wird. Ein weiterer Vorteil ist darin zu sehen, dass mehr Freiheitsgrade bei der Produktionsplanung zur Verfügung stehen. Bisher existierte für jeden Auftrag eine einzige genormte Stahlmarke mit vorgegebenen Sollwerten für das Walzen und Kühlen. Demgegenüber stehen bei dem erfindungsgemäßen Verfahren mehrere Vorgaben pro Auftrag zur Verfügung, die jeweils die geforderten Materialeigenschaften erfüllen. Jede Vorgabe besteht aus der Werksnorm, die die Stahlmarke angibt einschließlich der Sollwerte für das Walzen und Kühlen. Von den mehreren Vorgaben kann durch den Gefügeoptimierer 1 diejenige berechnet und ausgewählt werden, die die geringsten Produktionskosten verursacht.

Die Auftragseinplanung liefert der Schmelzenplanung für jeden Auftrag eine Liste alternativer Werksnormen zur Erzielung der Materialeigenschaften und zusätzlich dazu passende, mittels des Gefügeoptimierers berechnete Sollwerte. Dadurch ergeben sich sehr viel mehr Freiheitsgrade für die Planung der Schmelzen. Es lassen sich größere Sequenzen bilden, die Anzahl der Stahlmarkenwechsel wird verringert. Ebenso können die Füllaufträge in den Schmelzen verringert werden. Die Produktion kann mit einer geringeren Anzahl von Stahlmarken durchgeführt werden, indem auftragsspezifische Eigenschaften durch berechnete Walz- und Kühlvorschriften ausgeglichen werden. Die Auftragseinplanung liefert der Schmelzenplanung mehr Aufträge mit der gleichen Stahlmarke zur Erzielung besserer Produktionsprogramme. Der Gefügeoptimierer berechnet geeignete Sollwerte für die auftragsspezifischen Materialeigenschaften.

Fig. 4 zeigt ein Flussdiagramm mit den einzelnen Verfahrensschritten am Beispiel eines Warmwalzwerkes.

Vor dem Beginn der Produktion werden die Kosten bezüglich der chemischen Analyse offline optimiert. Das Ergebnis dieser Optimierung kann in dem Verfahrensschritt 12 benutzt werden, um die Stammdaten des Produktionssteuerungssystems zu modifizieren. Die Auftragseinplanung 13 kann je Auftrag der Schmelzenplanung eine breite Auswahl an Stahlmarken zur Planung angeboten werden. Die Schmelzenplanung optimiert im Produktionsplan die Kosten bezüglich der Materialeigenschaften. Es erfolgt eine Online-Qualitätskontrolle 15, bei der die Anbindung einer Bramme an einen Auftrag entweder gerettet wird oder die Bramme online umgebunden wird. Eine weitere Online-Qualitätskontrolle 16 erfolgt nach dem Erwärmen im Ofen beziehungsweise dem Walzen im Vorgerüst. Nach einer weiteren Online-Qualitätskontrolle 17 nach dem Haspel kann das Coil sofort freigegeben werden, wodurch das Verfahren beendet wird.

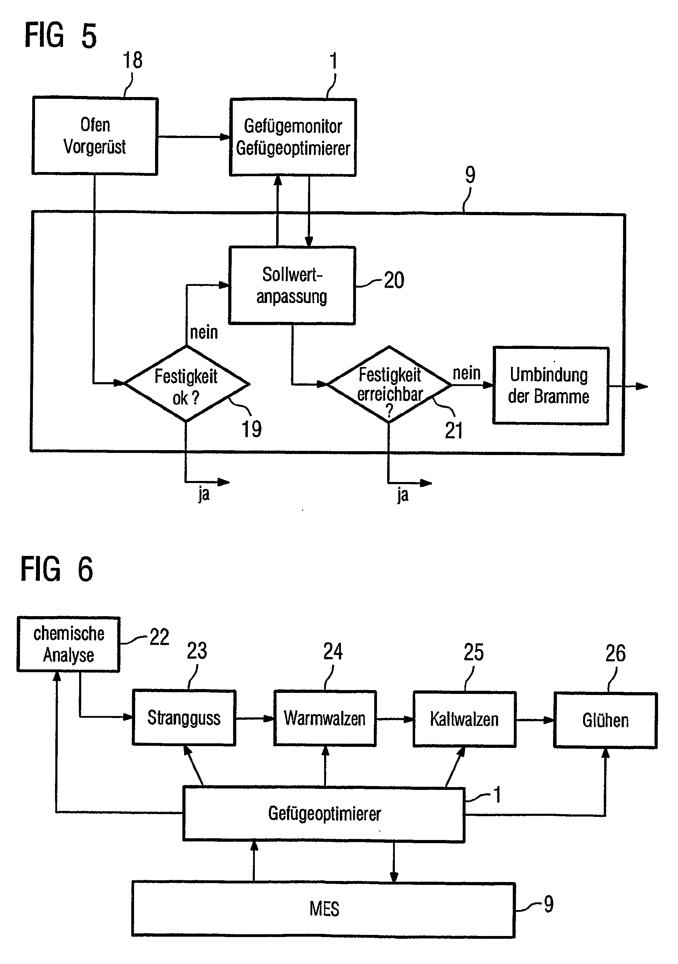

Fig. 5 zeigt die Durchführung der Qualitätskontrolle während der Produktion.

Vom Ofen beziehungsweise dem Vorgerüst 18 gelangen die aktuellen Prozessdaten zum Produktionssteuerungssystem (MES) 9. Im Schritt 19 wird geprüft, ob die geforderten Materialeigenschaften erreichbar sind. Wenn das Ergebnis "ja" ist, wird die Produktion mit den aktuellen Sollwerten fortgesetzt. Wenn das Ergebnis "nein" lautet, muss im Schritt 20 eine Anpassung der Sollwerte des Auftrags durchgeführt werden. Dazu wirkt das Produktionssteuerungssystem 9 mit dem Gefügemonitor und Gefügeoptimierer 1 zusammen und erhält modifizierte Sollwerte. Auf der Grundlage der modifizierten Sollwerte wird im Verfahrensschritt 21 geprüft, ob die Festigkeit mit den modifizierten Sollwerten erreichbar ist. Wenn die Festigkeit erreichbar ist, wird die Produktion mit den modifizierten Sollwerten durchgeführt. Falls die Festigkeit nicht erreichbar ist, wird eine Umbindungsanforderung ausgegeben, um die Bramme an einen anderen Auftrag anzubinden. Die Anzahl der Umbindungen wird verringert, durch die Modifizierung der Sollwerte kann die Bramme für den vorliegenden Auftrag in vielen Fällen noch gerettet werden. Diejenigen Brammen oder Coils, die für den vorliegenden Auftrag nicht geeignet sind, werden sofort umgebunden, ohne dass weitere Herstellungsschritte durchgeführt werden.

Fig. 6 zeigt in einem Diagramm die Ermittlung optimaler Sollwerte für den gesamten Produktionsweg.

Durch das Verfahren werden optimale Sollwerte für den gesamten Produktionsweg ermittelt, wobei die einzelnen Operationen und Behandlungsschritte des Fertigungsablaufs rechnerisch modelliert und simuliert werden. Grundlage für die Optimierungsrechnung ist die chemische Analyse 22, deren Ergebnisse Eingangsgrößen für den Strangguss 23 sind. Daran schließt sich das Warmwalzen 24 und das Kaltwalzen 25 an. Zur Verbesserung des Gefüges folgt nach dem Kaltwalzen ein Glühvorgang 26. Sämtliche einzelnen Behandlungsschritte fließen in die mathematischen Modelle des Gefügeoptimierers 1 ein, so dass dieser unter Berücksichtigung des gesamten Produktionsablaufs optimale Sollwerte ermitteln kann. Der Gefügeoptimierer 1 ist wiederum mit dem Produktionssteuerungssystem (MES) 9 gekoppelt, dementsprechend kann die Produktion in Abhängigkeit der Ergebnisse des Gefügeoptimierers 1 gesteuert werden. Insgesamt lassen sich durch das Verfahren erhebliche Energie- und Materialkosten einsparen. Zusätzlich wird Expertenwissen über den Gesamtprozess aufgebaut.

## Patentansprüche

1. Verfahren zur Steuerung einer Anlage zur Herstellung von Stahl, der bestimmte vom Gefüge abhängige, durch Betriebsparameter der Anlage beeinflussbare Materialeigenschaften aufweist, welche Betriebsparameter mittels eines Rechenprogramms zur Gefügeoptimierung festgelegt werden, **dadurch gekennzeichnet , dass** gleichzeitig die Sollwerte der chemischen Zusammensetzung des Stahls mittels des Rechenprogramms zur Gefügeoptimierung festgelegt werden.

2. Verfahren nach Anspruch 1, **dadurch gekennzeichnet, dass** die Sollwerte der chemischen Zusammensetzung und gegebenenfalls dazu passend berechnete Betriebsparameter für eine bestimmte Stahlanwendung jeweils in einem Datensatz zusammengefasst werden.

3. Verfahren nach Anspruch 2, **dadurch gekennzeichnet, dass** durch das Rechenprogramm zur Gefügeoptimierung in der Produktionsplanung eine optimale Kombination von Datensätzen für die jeweilige Stahlanwendung der zuplanenden Aufträge ausgewählt wird.

4. Verfahren nach einem der vorangehenden Ansprüche, **dadurch gekennzeichnet , dass** die Istwerte der chemischen Zusammensetzung des Stahls und die Istwerte der Betriebsparameter mit den Sollwerten verglichen werden und das Rechenprogramm zur Gefügeoptimierung beim Vorliegen von Abweichungen erneut durchlaufen wird.

5. Verfahren nach Anspruch 4, **dadurch gekennzeichnet, dass** einem Sollwert ein zwischen einer unteren und einer oberen Schranke liegender Toleranzbereich zugeordnet wird und das Rechenprogramm zur Gefügeoptimierung beim Verlassen des Toleranzbereichs zur Festlegung von Sollwerten für die chemische Zusammensetzung des Stahls und/oder für die Betriebsparameter erneut durchlaufen wird.

6. Verfahren nach einem der vorangehenden Ansprüche, **dadurch gekennzeichnet , dass** das Rechenprogramm zur Gefügeoptimierung die Sollwerte mit dem Ziel möglichst geringer Materialkosten und/oder Produktionskosten festlegt.

7. Verfahren nach einem der vorangehenden Ansprüche, **dadurch gekennzeichnet , dass** während und/oder nach einem Produktionsschritt mittels des Rechenprogramms zur Gefügeoptimierung eine Qualitätskontrolle durch Vergleich der Sollwerte mit den Istwerten durchgeführt wird.

8. Verfahren nach Anspruch 7, **dadurch gekennzeichnet, dass** die Qualitätskontrolle in einem Warmwalzwerk bei der Brammenanbindung an den Produktionsauftrag im Brammenlager und/oder am Ausgang eines Erwärmungsofens und/oder am Ausgang des Vorgerüsts und/oder der Haspel am Ende einer Produktionslinie durchgeführt wird.

9. Verfahren nach einem der vorangehenden Ansprüche, **dadurch gekennzeichnet, dass** das Rechenprogramm zur Gefügeoptimierung überprüft, ob die geforderten Materialeigenschaften in nachfolgenden Produktionsschritten mit den aktuellen Sollwerten erreichbar sind.

10. Verfahren nach Anspruch 9, **dadurch gekennzeichnet, dass** das Rechenprogramm die Sollwerte anpasst, wenn die geforderten Materialeigenschaften in nachfolgenden Produktionsschritten mit den aktuellen Sollwerten nicht erreichbar sind.

11. Verfahren nach einem der vorangehenden Ansprüche, **dadurch gekennzeichnet, dass** es mit der Produktionsplanung der Stahlherstellungsanlage gekoppelt wird.

12. Verfahren nach einem der vorangehenden Ansprüche, **dadurch gekennzeichnet , dass** es mit dem Produktionssteuerungssystem der Stahlherstellungsanlage gekoppelt wird.

13. Verfahren nach einem der vorangehenden Ansprüche, **dadurch gekennzeichnet , dass** durch berechnete Variationen der Betriebsparameter bei der Festlegung einer Stahlmarke für einen Auftrag die Anzahl der Stahlmarken eines Werkes reduziert wird.

14. Verfahren nach einem der vorangehenden Ansprüche, **dadurch gekennzeichnet , dass** durch Variation der Betriebsparameter die Toleranzbereiche für die chemischen Elemente von Stahlmarken vergrößert werden.

15. Einrichtung zur Durchführung des Verfahrens nach einem der vorangehenden Ansprüche zur Steuerung einer Anlage zur Herstellung von Stahl, der bestimmte vom Gefüge abhängige, durch Betriebsparameter der Anlage beeinflussbare Materialeigenschaften aufweist, welche Betriebsparameter mittels eines Rechenprogramms zur Gefügeoptimierung festlegbar sind, **dadurch gekennzeichnet , dass** das Rechenprogramm zur Gefügeoptimierung auch zum Festlegen der Sollwerte der chemischen Zusammensetzung des Stahls ausgebildet ist.

## Claims

1. Method for controlling an installation for the production of steel which has defined materials properties that are dependent on the microstructure and can be influenced by operating parameters of the installation, which operating parameters are defined by means of a computation program for microstructure optimization, **characterized in that** at the same time the setpoint values for the chemical composition of the steel are defined by means of the computation program for microstructure optimization.

2. Method according to Claim 1, **characterized in that** the setpoint values for the chemical composition and if appropriate correspondingly calculated operating parameters for a defined steel application are in each case combined in a data record.

3. Method according to Claim 2, **characterized in that** the computation program for microstructure optimization, during production planning, selects an optimum combination of data records for the respective steel application of the orders to be planned.

4. Method according to one of the preceding claims, **characterized in that** the actual values for the chemical composition of the steel and the actual values for the operating parameters are compared with the setpoint values, and if deviations are present the computation program for microstructure optimization is run through again.

5. Method according to Claim 4, **characterized in that** a setpoint value is assigned a tolerance range, which lies between an upper limit and a lower limit, and the computation program for microstructure optimization is run through again in order to define setpoint values for the chemical composition of the steel and/or for the operating parameters in the event of values which lie outside the tolerance range.

6. Method according to one of the preceding claims, **characterized in that** the computation program for microstructure optimization defines the setpoint values with the objective of minimizing materials costs and/or production costs.

7. Method according to one of the preceding claims, **characterized in that** during and/or after a production step, a quality check is carried out by comparing the setpoint values with the actual values by means of the computation program for microstructure optimization.

8. Method according to Claim 7, **characterized in that** the quality check is carried out in a hot-rolling mill during the linking of slabs to the production order in the slab yard and/or at the exit of a heating furnace and/or at the exit of the roughing stand and/or of the coiler at the end of a production line.

9. Method according to one of the preceding claims, **characterized in that** the computation program for microstructure optimization checks whether the required materials properties can be achieved with the current setpoint values in subsequent production steps.

10. Method according to Claim 9, **characterized in that** the computation program adapts the setpoint values if the required materials properties in subsequent production steps cannot be achieved with the current setpoint values.

11. Method according to one of the preceding claims, **characterized in that** it is coupled to the production planning of the steel production installation.

12. Method according to one of the preceding claims, **characterized in that** it is coupled to the production control system of the steel production installation.

13. Method according to one of the preceding claims, **characterized in that** the number of steel grades in a plant is reduced by calculated variations in the operating parameters when defining a steel grade for an order.

14. Method according to one of the preceding claims, **characterized in that** the tolerance ranges for the chemical elements in steel grades are increased by varying the operating parameters.

15. Device for carrying out the method according to one of the preceding claims for controlling an installation for producing steel, which has defined materials properties that are dependent on the microstructure and can be influenced by operating parameters of the installation, which operating parameters can be defined by means of a computation program for microstructure optimization, **characterized in that** the computation program for microstructure optimization is also designed to define the setpoint values for the chemical composition of the steel.

## Revendications

1. Procédé pour la commande d'une installation destinée à la production d'acier présentant certaines propriétés de matériau dépendantes de la structure et influençables par des paramètres d'exploitation de l'installation, lesquels paramètres d'exploitation sont spécifiés au moyen d'un programme de calcul pour l'optimisation de la structure, **caractérisé par le fait que**, en même temps, sont spécifiées les valeurs de consigne de la composition chimique de l'acier au moyen du programme de calcul pour l'optimisation de la structure.

2. Procédé selon la revendication 1, **caractérisé par le fait que** les valeurs de consigne de la composition chimique et éventuellement des paramètres d'exploitation calculés de manière adaptée à celle-ci pour une certaine utilisation de l'acier sont réunis dans un ensemble de données.

3. Procédé selon la revendication 2, **caractérisé par le fait que**, dans la planification de production, le programme de calcul pour l'optimisation de structure sélectionne une combinaison optimale d'ensembles de données pour l'utilisation respective de l'acier des tâches à planifier.

4. Procédé selon l'une des revendications précédentes, **caractérisé par le fait que** les valeurs réelles de la composition chimique de l'acier et les valeurs réelles des paramètres d'exploitation sont comparées aux valeurs de consigne et que le programme de calcul pour l'optimisation de structure est à nouveau exécuté en présence d'écarts.

5. Procédé selon la revendication 4, **caractérisé par le fait qu'**une plage de tolérance comprise entre une limite inférieure et une limite supérieure est associée à une valeur de consigne et que le programme de calcul pour l'optimisation de structure est exécuté à nouveau en présence d'un écart hors de la plage de tolérance pour la spécification de valeurs de consigne pour la composition chimique de l'acier et/ou pour les paramètres d'exploitation.

6. Procédé selon l'une des revendications précédentes, **caractérisé par le fait que** le programme de calcul pour l'optimisation de structure spécifie les valeurs de consigne dans le but de minimiser des coûts de matériau et/ou des coûts de production.

7. Procédé selon l'une des revendications précédentes, **caractérisé par le fait que**, pendant et/ou après une étape de production, un contrôle de qualité est effectué au moyen du programme de calcul pour l'optimisation de structure par le biais d'une comparaison des valeurs de consigne et des valeurs réelles.

8. Procédé selon la revendication 7, **caractérisé par le fait que** le contrôle de qualité dans un laminoir à froid est effectué lors du rattachement de brames à la tâche de production dans le stock de brames et/ou à la sortie d'un four de chauffage et/ou à la sortie du train ébaucheur et/ou du tourniquet à la fin d'une ligne de production.

9. Procédé selon l'une des revendications précédentes, **caractérisé par le fait que** le programme de calcul pour l'optimisation de structure vérifie si les propriétés demandées pour le matériau peuvent être atteintes dans des étapes de production suivantes avec les valeurs de consigne actuelles.

10. Procédé selon la revendication 9, **caractérisé par le fait que** le programme de calcul adapte les valeurs de consigne si les propriétés demandées pour le matériau ne peuvent pas être atteintes dans des étapes de production suivantes avec les valeurs de consigne actuelles.

11. Procédé selon l'une des revendications précédentes, **caractérisé par le fait qu'**il est couplé à la planification de production de l'installation de production d'acier.

12. Procédé selon l'une des revendications précédentes, **caractérisé par le fait qu'**il est couplé au système de commande de production de l'installation de production d'acier.

13. Procédé selon l'une des revendications précédentes, **caractérisé par le fait que**, par des variations calculées des paramètres d'exploitation lors de la spécification d'une qualité d'acier pour une tâche, le nombre des qualités d'acier d'une usine est réduit.

14. Procédé selon l'une des revendications précédentes, **caractérisé par le fait que**, par des variations des paramètres d'exploitation, les plages de tolérance pour les éléments chimiques de qualités d'acier sont agrandies.

15. Dispositif pour la mise en oeuvre du procédé selon l'une des revendications précédentes pour la commande d'une installation destinée à la production d'acier présentant certaines propriétés de matériau dépendantes de la structure et influençables par des paramètres d'exploitation de l'installation, lesquels paramètres d'exploitation peuvent être spécifiés au moyen d'un programme de calcul pour l'optimisation de la structure, **caractérisé par le fait que** le programme de calcul pour l'optimisation de structure est aussi conçu pour la spécification des valeurs de consigne de la composition chimique de l'acier.
